# EUROPÄISCHE PATENTANMELDUNG

(11) **EP 3 070 065 A1**
(43) Veröffentlichungstag der Anmeldung: **21.09.2016**
(21) Anmeldenummer: 15000784.7
(22) Anmeldetag: 17.03.2015
(51) Int. Cl.: C04B 28/02, C04B 28/04, C04B 28/08, C04B 28/18, C04B 28/26, C04B 40/00, C04B 28/00

(54) **VERZÖGERERMISCHUNG FÜR ALKALI-AKTIVIERTE BINDEMITTEL**

(71) Anmelder: HeidelbergCement AG, 69120 Heidelberg (DE)
(72) Erfinder: Blaum, Peter, 55294 Bodenheim (DE); Bullerjahn, Frank, 69181 Leimen (DE); Zajac, Maciej, 69181 Leimen (DE)
(74) Vertreter: Wagner, Jutta

(57) **Zusammenfassung**

Die Erfindung betrifft eine Verzögerermischung umfassend Natriumgluconat und Alkalihydrogencarbonat, ein alkaliaktiviertes Bindemittel enthaltend Natriumgluconat und Alkalihydrogencarbonat, sowie ein Verfahren zur Einstellung der Festigkeitsentwicklung, bei dem Natriumgluconat und Alkalihydrogencarbonat einem alkaliaktivierten Bindemittel zugesetzt werden.

## Beschreibung

Die vorliegende Erfindung betrifft Verzögerermischungen welche die Erstarrung und/oder Erhärtung von Alkali-aktivierten anorganischen Bindemitteln, insbesondere von Geopolymeren, verzögern.

Mit Geopolymer werden anorganische Bindemittel bezeichnet, die analog zu klassischem Portlandzement zu einer fließfähigen Paste angemacht werden können und dann zu festen Strukturen erhärten. Im Unterschied zu Portlandzement-basierten Systemen erfolgt die Erhärtung bei den klassischen, Zeolith-ähnliche Strukturen ausbildenden Geopolymeren durch eine Reaktion von Silikat mit Aluminat unter stark alkalischen Bedingungen. Typischerweise können diese Bedingungen durch eine Kombination von Alkalihydroxidlösung und Alkalisilikatlösung bereitgestellt werden, wobei sich ein wässriges Bindemittelsystem ergibt. Alternativ kann ein trockenes Bindemittelsystem erzeugt werden, indem ein fester Aktivator benutzt wird, beispielsweise festes Alkalisilikat. Das Ergebnis der Reaktion des Geopolymers ist ein amorphes, dreidimensionales Netzwerk von Silicium-und Aluminiumatomen, die durch Sauerstoffatome zu einer polymeren Struktur vernetzt sind.

Zur Herstellung von klassischen, Zeolith-ähnliche Strukturen ausbildenden Geopolymeren werden Rohstoffe verwendet, die Silikate und Aluminate in geeigneter Menge bereitstellen. Prinzipiell können mineralische Rohstoffe, z.B. Metakaolin, oder synthetische Materialien wie industrielle Nebenprodukte, z.B. Silicium-reiche Flugaschen, verwendet werden. Der Einsatz industrieller Nebenprodukte ist unter ökonomischen und ökologischen Gesichtspunkten der Nutzung von mineralischen Rohstoffen vorzuziehen. In jüngerer Vergangenheit hat sich das Spektrum der zur Herstellung des vorgenannten Bindemitteltyps eingesetzten Rohstoffe/industriellen Nebenprodukte sukzessive erweitert. Neben puzzolanisch wirksamen, siliciumreichen Flugaschen werden hierbei insbesondere latent-hydraulisch und/oder puzzolanisch wirksame calciumreiche Flugaschen und Hüttensande/Schlacken eingesetzt.

Die Reaktivität der Rohstoffe beeinflusst die Leistungsfähigkeit des hergestellten Geopolymerbindemittels maßgeblich und wird von folgenden Eigenschaften der Rohstoffe bestimmt:
- Volumenanteil der reaktiven Glasphase
- Volumenanteil der reaktiven kristallinen Phasen
- chemische Zusammensetzung der Glasphase
- Freikalkgehalt
- Kohlenstoffgehalt
- Größe der reaktiven Oberflächen.

Ein hoher Volumenanteil Glasphase ist vorteilhaft für die Reaktivität des Bindemittels, da die Glasphase eine hohe Löslichkeit besitzt. Zusätzlich wird die Reaktivität von der chemischen Zusammensetzung bestimmt: je höher der CaO Gehalt desto höher ist die Reaktivität. Materialien mit hohem Freikalkgehalt sollten aber vermieden werden, da Freikalk eine Blitzerstarrung auslösen kann. Kohlenstoffverbindungen in Form unverbrannter Kohlepartikel steigern aufgrund Ihrer großen inneren Oberfläche den Bedarf an Aktivator und den Wasseranspruch, was die Leistungsfähigkeit des Bindemittels verschlechtert und die Kosten erhöht. Die reaktive Oberfläche ist eine weitere wichtige Einflussgröße, je höher die reaktive Oberfläche desto löslicher ist der Rohstoff. Daher ist der Einsatz von gemahlenen Aluminosilikat-haltigen Rohstoffen vorteilhaft, was sich bei Flugaschen stärker auswirkt als bei Hüttensanden. Typische Werte für die genannten Eigenschaften bei üblichen Rohstoffen sind in der folgenden Tabelle 1 zusammengestellt:

**Tabelle 1**

| **Eigenschaft Rohmaterial** | **Siliciumreiche FA** | **Calciumreiche FA** | **Hüttensand** |
|---|---|---|---|
| Anteil Glasphase [Gew.-%] | 60-80 | 40-60 | 90-100 |
| CaO-Gehalt [Gew.%] | 0-10 | 12-40 | 35-45 |
| CaO-Gehalt ohne Freikalk [Gew.-%] | 0-10 | 10-30 | 35-45 |
| Freikalk [Gew.%] | 0 | 2-10 | 0 |
| Unverbrannte Kohlepartikel [Gew.-%] | 0-5 | 0-8 | 0 |
| Oberfläche [cm²/g] | Die Größe der reaktiven Oberfläche hängt von der gewählten Mahlfeinheit ab. Eine Feinheit von ca. 4000 cm²/g wird empfohlen | | |

Der Aktivator soll einen hohen pH-Wert bereitstellen, um die verwendeten Rohmaterialien glasig-kristalliner Natur (z.B. Flugaschen, Hüttensande u.a.) auflösen zu können. Hierbei werden die chemischen Bindungen in den vorliegenden Aluminosilikat-, Calciumsilikat-, Calciumaluminosilikat-, Calciumaluminat-, Calciumferrit- und Calciumaluminoferritverbindungen aufgebrochen, und die freigesetzten Mono- und Polymerfragmente der Porenlösung zugeführt. Außerdem führt der Aktivator Silicium- und Aluminiumoxidverbindungen zu, welche die Bildung des Geopolymer-Netzwerks fördern. Als Aktivator für Geopolymere sind verschiedene Substanzen geeignet:
- Alkali-/Erdalkali-Silikate, z.B. Natrium- oder Kaliumsilikat, Natriummetasilikat sowohl wasserfrei als auch als Pentahydrat
- Alkali-/Erdalkali-Hydroxide, z.B. Natriumhydroxid, Calciumhydroxid, Kaliumhydroxid
- Alkali-/Erdalkali-Carbonate, z.B. Natriumcarbonat
- Alkali-/Erdalkalisulfate, z.B. Natriumsulfat, Kaliumsulfat
- Kombinationen vorgenannter Substanzen
- Portlandzement(klinker) in Kombinationen mit mindestens einer der vorgenannten Substanzen.

Der alkalische Aktivator kann als flüssige oder feste Komponente zugefügt werden. Für ein Zufügen im festen Zustand wird der Aktivator vorzugsweise mit den latent-hydraulisch und/oder puzzolanisch wirksamen Bindemittelkomponenten vermahlen, um die Reaktivität zu steigern. Die Co-Vermahlung kann während des laufenden Mahlprozesses vorgenannter latent-hydraulisch und/oder puzzolanisch wirksamer Bindemittelkomponenten initiiert werden. Liegen diese bereits in gemahlener oder ausreichend feiner Form vor, kann ein zusätzlicher Mahlschritt durchgeführt werden, um eine adäquat homogene Verteilung des Aktivators, respektive gleichmäßige Benetzung der reaktiven Oberflächen des Rohmaterials, garantieren zu können. Flüssige Aktivatorkomponenten neigen zum Carbonatisieren, so dass sie abgeschlossen gelagert werden müssen. Je nach Aktivatorkomponente werden verschiedene pH-Werte erreicht, die folgende Tabelle 2 gibt eine Übersicht.

**Tabelle 2**

| **Aktivatorkomponente** | **SiO₂ [Gew.-%]** | **Na₂O [Gew.-%]** | **SiO₂/Na₂O [a.u.]** | **pH einer 1%-Lsg. bei 20°C** |
|---|---|---|---|---|
| Natrium-Silikat Lsg. (Wasserglas) (I) | 26-33 | 8-17 | 1,6-3,2 | 11 - 13 |
| Natrium-Metasilikat Pentahydrat (s) | 28,5 | 28,7 | 1,0 | 12,5 |
| Natrium-Metasilikat (wasserfrei) (s) | 47,0 | 51,0 | 0,9 | 12,6 |
| Natriumhydroxid (s) | - | 76,0 | - | 13,1 |
| Natriumcarbonat (s) | - | 58,0 | - | 11,4 |

Die Erhärtung von Geopolymeren kann in drei Phasen unterteilt werden. In der ersten Phase werden Silicate, Aluminate und Ferrite durch Aufbrechen der chemischen Bindungen aus den vorliegenden glasig-kristallinen Bindemittelkomponenten/Rohmaterialien freigesetzt. Dies wird durch Hydroxidionen aus dem Aktivator initiiert. Dabei werden monomolekulare und kondensierte Fragmente in die Porenlösung gebracht. Je nach chemischem Aufbau des Geopolymers benötigt die Freisetzung sehr starke Alkalien oder schwächer alkalische Substanzen reichen aus. Starke Aktivatoren werden vor allem für Geopolymere, die überwiegend aus Aluminosilikat, d.h. netzwerkbildenden Aluminium- und Siliciumoxiden, bestehen, benötigt, da viele kovalente Bindungen vorliegen. Sind die Aluminosilikatstrukturen durch einen wesentlichen Gehalt an Fremdionen wie Ca²⁺, Mg²⁺, Na⁺, K⁺ in der Glasphase modifiziert, liegen viele ionische Bindungen vor, die auch von schwächeren Aktivatoren gebrochen werden können. Siliciumreiche Flugaschen benötigen folglich starke Aktivatoren, wie Alkalihydoxide und Alkalisilikate, für kalkreiche Flugaschen und Hüttensand reichen schwächere Aktivatoren wie Carbonate oft aus.

In der zweiten Phase erfolgen Transporte und Koagulationen, welche die Bildung eines Vorläufergels unterstützen.

In der dritten Phase erfolgt die Kondensation, bei der das feste dreidimensionale Netzwerk von Aluminosilikaten gebildet wird. Hierbei können Mono- und Polysilikatanionen aus dem Aktivator die Reorganisation der Aluminosilikatfragmente aus dem Geopolymer zu festen Strukturen mit einem höheren Polymerisationsgrad unterstützen.

Soweit, wie beispielsweise bei Hüttensand und kalkreichen Flugaschen, relevante Gehalte an CaO vorhanden sind, werden auch Hydratationsprozesse analog zu Portlandzement initiiert. Neben dem Geopolymer-Gel bilden sich Calciumsilikathydrate (C-S-H), Calciumaluminatsilikathydrate (C-A-S-H), Metall-Metallhydroxisalze (z.B. Vertreter der Hydrotalkitgruppe) und Ca-Metallhydroxisalze (z.B. Vertreter der Calciumaluminathydrate). Die Wasser verbrauchenden Hydratationsprozesse erhöhen den pH-Wert der Porenlösung und dadurch die Auflösungsgeschwindigkeit der latent-hydraulisch und/oder puzzolanisch wirksamen Bindemittelkomponenten/Rohstoffe. Daher trägt die Anwesenheit von Calcium zur mechanischen Festigkeit des erhärteten Bindemittelsystems nicht nur durch die Bildung von C-S-H und C-A-S-H sondern auch durch die Beschleunigung der Geopolymererhärtung bei. Die Reaktion der Geopolymere kann auch durch Erwärmen auf bis zu 90 °C beschleunigt werden.

Die Zusammensetzung des Geopolymer-Bindemittels muss verschiedene Parameter berücksichtigen und kann deswegen kompliziert sein. Die wichtigsten Parameter sind der CaO-Gehalt, der Gehalt an Aktivator und das SiO₂/Na₂O-Verhältnis im Aktivator. Außerdem üben der Wasser/Bindemittelwert und die Erhärtungstemperatur einen wichtigen Einfluss aus.

Siliciumreiche Flugaschen mit einem niedrigen Gehalt an CaO, typisch < 10 Gew.-%, ergeben klassische Geopolymer-Bindemittel, die im wesentlichen nur durch Bildung von Aluminosilikat-Netzwerken (Zeolithen) erhärten. Hier werden stark alkalische Aktivatoren eingesetzt. Wenn der CaO-Gehalt, wie z.B. bei der Verwendung von latent-hydraulisch wirksamen calciumreichen Flugaschen bzw. Hüttensanden auf > 10 % ansteigt, kommt bei der Erhärtung zum Polymerisationsprozess die Bildung von z.B. C-S-H hinzu.

Für Geopolymere mit niedrigem CaO-Gehalt < 10% sind in der Regel 12 - 17 % Aktivator, ein SiO₂/Na₂O-Verhältnis im Aktivator von 0,75 bis 1,0 und ein Wasser-Bindemittelwert von ca. 0,35 brauchbar.

Die erreichbare Festigkeit steigt in diesen Bindemitteln mit zunehmendem CaO-Gehalt. Der CaO-Gehalt beeinflusst aber auch die offene Zeit des Bindemittels stark. Mit steigendem CaO-Gehalt verringert sich die offene Zeit soweit, das eine Verarbeitung nicht mehr möglich ist. Für solche Geopolymer-Bindemittel sind daher verzögernde Zusatzmittel notwendig.

Bei Geopolymer-Bindemitteln mit einem CaO-Gehalt ab 10 Gew.-%, wie sie z.B. bei Hüttensand als Rohstoff erhalten werden, muss der Aktivator auf das konkrete System einzeln abgestimmt werden. Üblicherweise benötigen Geopolymere mit CaO-Gehalten im unteren Bereich von < 10 % eher größere Mengen an Aktivator, bei einem CaO-Gehalt von > 10 Gew.-% ergeben sich meist mit geringeren Gehalten an Aktivator optimale Festigkeiten.

Zum Prüfen der optimalen Zusammensetzung lassen sich von EN 196-1 adaptierte Methoden nutzen, wobei 450 g Bindemittel, 1350 g Sand und ein Wasserbindemittelwert (W/B) von 0,35 bis 0,4 angewandt werden. Solche Mörtel sollten bei einer brauchbaren Zusammensetzung eine Druckfestigkeit von mindestens 10 MPa nach 2 Tagen Erhärtung bei 20 °C ergeben. Es hat sich gezeigt, dass Geopolymer-Bindemittel mit niedrigem bis mittlerem CaO-Gehalt auf Variationen des W/B sehr empfindlich reagieren, eine Erhöhung des W/B um 0,05 kann zu einer Halbierung der Festigkeit führen. Die Festigkeit nach 28 Tagen kann bei bis zu 60 MPa liegen, hängt aber stark von den verwendeten latent-hydraulisch und/oder puzzolanisch wirksamen Bindemittelkomponenten und der Gesamtzusammensetzung ab.

Ein Problem ist, dass häufig eine hohe Festigkeit mit einer schlechten Verarbeitbarkeit im Sinne einer sehr kurzen offenen Zeit einhergeht. Beide Eigenschaften können durch die Menge und Art des Aktivators beeinflusst werden, die Anforderungen sind aber gegenläufig. Anders als in Portlandzementsystemen ergibt eine Erhöhung des W/B meist keine längere Verarbeitbarkeit. Daher wird ein verzögerndes Zusatzmittel benötigt.

Während in Portlandzement (OPC) eine Vielzahl an Zusatzmitteln und darunter auch Verzögerer bekannt und bewährt sind, ist der Stand der Technik in Bezug auf Zusatzmittel bei Geopolymeren begrenzt und teilweise widersprüchlich. Einig sind sich die Autoren darüber, dass von der Wirkung in OPC nicht auf eine Wirkung in Geopolymeren geschlossen werden kann.

Mit Zusatzmittel sind hier solche Substanzen gemeint, die zur gezielten Veränderung/Einstellung von Eigenschaften des Bindemittels bei der Verarbeitung oder des erhärteten Systems zugefügt werden. Unter Zusatzmitteln sind Betonzusatzmittel nach DIN EN 934 und solche mit bauaufsichtlicher Zulassung zu nennen, beispielsweise: Betonverflüssiger, Fließmittel, Luftporenbildner, Dichtungsmittel, Verzögerer, Erstarrungsbeschleuniger, Erhärtungsbeschleuniger, Stabilisierer etc. Dazu zählen nicht die Aktivatoren, obwohl diese in OPC-basierten Systemen als Zusatzmittel Anwendung finden, die Aktivatoren sind bei den Geopolymeren Bestandteil des Bindemittels. Außerdem sind von den Zusatzmitteln die Zusatzstoffe zu unterscheiden, welche im Beton verwendet werden, um Eigenschaften gezielt zu verbessern oder zu erreichen, wie Gesteinsmehle (Füllstoff), Pigmente, Fasern etc.

Der Einsatz von Zusatzmitteln in den erfindungsgemäßen Alkaliaktivierten Bindemittelsystemen muss mehrere Besonderheiten dieser Systeme berücksichtigen. Zunächst muss selbst die geringe mit dem Zusatzmittel eingebrachte Wassermenge für das W/B berücksichtigt werden, da die Bindemittel diesbezüglich sehr empfindlich sind. Der mögliche Gehalt an Kohlenstoffverbindungen in Form unverbrannter Kohlepartikel, besonders bei Systemen aus Flugasche, kann die Dosierung des Zusatzmittels extrem beeinflussen, da Zusatzmittel typischerweise organische Substanzen sind, die bevorzugt an den flächenmäßig dominierenden inneren Oberflächen der nicht-reaktiven Kohlepartikel gebunden werden. Es muss außerdem sichergestellt werden, dass eine Wirkung nicht auf Effekten wie Lufteinschluss beruht. Viele organische Zusatzmittel wirken auch als Luftporenbildner und können durch das Einbringen von Luftbläschen z.B. eine verflüssigende Wirkung vortäuschen. Besonders schwierig ist der sehr hohe pH-Wert der Bindemittel, durch den viele im OPC brauchbare Zusatzmittel unwirksam gemacht werden, z.B. indem sie zersetzt werden.

Gemäß WO 2008/017413 A1 und EP 2 093 200 A1 sollen Borverbindungen, Lignosulfate, Natriumgluconat, Natriumglucoheptonat, Weinsäure und Phosphorverbindungen als Verzögerer in Geopolymerzement wirksam sein. Diese beiden Anmeldungen befassen sich jedoch mit einer sehr speziellen Anwendung, nämlich pumpfähigen Mischungen für Ölbohranwendungen, bei denen die Anforderungen an Verarbeitbarkeit, Festigkeitsentwicklung und Endfestigkeit sehr von denen bei Hochbauanwendungen und in anderen Bereichen abweichen. Ein besonders wesentlicher Unterschied ist die erhöhte Temperatur bei Anwendung und Erhärtung. In den Beispielen werden Borverbindungen, Lignosulfat und Phosphorverbindungen untersucht, aber nur für Borverbindungen wird auch die Festigkeit bestimmt. Diese nimmt gegenüber den nicht verzögerten Systemen ab. Beide Dokumente schlagen auch den Zusatz von Beschleunigern vor und nennen Alkalihydroxide, die WO 2008/017413 zusätzlich Alkalicarbonate als brauchbare Substanzen. Zudem sollen die Zusammensetzung des Geopolymers und der Aktivator angepasst werden. Eine allgemeine Brauchbarkeit der genannten Substanzen zur Verzögerung von Geopolymeren lässt sich diesen Dokumenten nicht entnehmen.

In der US 4,306,912 wird ein Binder beschrieben, bei dem ein Gemisch aus der Schlacke, synthetischen oder natürlichen Puzzolanen, einem Verflüssiger wie sulfonierten Polyelektrolyten und Natriumcarbonat oder Natriumhydroxid Portlandzement teilweise oder ganz ersetzen soll. In dieser Schrift wird erwähnt, dass die US 3,960,582, US 3,959,004 und US 4,032,353 Natriumhydrogencarbonat kombiniert mit einem Verflüssiger zur Herstellung gut fließender Betone beschrieben. Gemäß den Versuchen in US 4,306,912 sind Hydrogencarbonate aber bei den untersuchten Bindemitteln nicht bzw. kaum wirksam. Eine Erklärung hierfür könnte sein, dass in US 3,960,582, US 3,959,004 und US 4,032,353 nur Portlandzemente und Puzzolanzemente untersucht wurden und die Wirksamkeit in alkalisch aktivierten Bindemitteln von der in mehrheitlich Portlandzement enthaltenden Bindemitteln abweicht.

In wissenschaftlichen Untersuchungen wurde eine Reihe potentielle Verzögerer geprüft. Eine Zusammenfassung mit Fundstellen geben Puertas F. et al. in Provis J.L. et al. "Alkali Activated Materials, State of the Art Report RILEM TC 224-AAM", Springer Verlag in Kapitel 6.3, S. 147-149. Dort wird berichtet, dass unter anderem Phosphorsäure und (Hydrogen)Phosphate, Borverbindungen und NaCl untersucht wurden, die Wirksamkeit aber variierte. Es gab auch schon Vorschläge für spezielle Mischungen.

In Bezug auf Verflüssiger und Plastifizierer, welche ebenfalls die Verarbeitbarkeit verbessern können, sind die Ergebnisse von Tests genauso uneinheitlich, siehe Puertas F. et al in Kapitel 6.4, S. 150-152. Die Wirksamkeit von Lignosulfaten scheint bestätigt, während andere Substanzen nicht zuverlässig wirken.

Es besteht daher weiterhin Bedarf an einem Zusatzmittel bzw. Verfahren zur Einstellung der Verarbeitbarkeit, welches in alkaliaktivierten Bindemitteln wirksam ist und die Festigkeitsentwicklung und die erreichbaren Festigkeiten nicht wesentlich beeinträchtigt.

Überraschend wurde nun gefunden, dass eine Kombination von Natriumgluconat und Alkalihydrogencarbonat die offene Zeit für alkaliaktivierte Bindemittel zuverlässig vergrößert ohne dass relevante Einbußen in den Festigkeiten oder eine wesentliche Beeinträchtigung der Festigkeitsentwicklung auftritt.

Die obige Aufgabe wird daher gelöst durch eine Verzögerermischung umfassend Natriumgluconat und Alkalihydrogencarbonat, durch ein alkaliaktiviertes Bindemittel enthaltend Natriumgluconat und Alkalihydrogencarbonat, sowie durch ein Verfahren zur Einstellung des Erstarrungsverhaltens, bei dem Natriumgluconat und Alkalihydrogencarbonat einem alkaliaktivierten Bindemittel zugesetzt werden.

Unter alkaliaktiviertem Bindemittel sind erfindungsgemäß sowohl klassische Geopolymere zu verstehen, als auch Gemische, welche Aluminosilikate bzw. Aluminate und Silikate und/oder Calcium(alumino)silikate in Kombination mit einem Aktivator umfassen und zumindest auch durch Ausbildung von dreidimensionalen, vernetzten Aluminosilikatpolymeren, Calciumsilikathydraten (C-S-H), Calciumaluminatsilikathydraten (C-A-S-H), Metall-Metallhydroxisalzen (z.B. Vertreter der Hydrotalkitgruppe) und Ca-Metallhydroxisalzen (z.B. Vertreter der Calciumaluminathydrate) erhärten. Alkaliaktivierte Bindemittel mit niedrigen CaO-Gehalten meint CaO-Gehalte von bis zu 10 Gew.-% bezogen auf den Gesamtgehalt an reaktivem CaO im zugrunde liegenden Bindemittelsystem, alkaliaktivierte Bindemittel mit mittlerem bis hohen CaO-Gehalten sind solche mit > 10 Gew.-% CaO, vorzugsweise >15 Gew.-% und mehr CaO.

Als Rohstoffe für die Herstellung von alkaliaktivierten Bindemitteln werden vorzugsweise Flugaschen, die sowohl kalkreich als auch silikatreich sein können, Hüttensande und Schlacken verwendet. Je nach chemischer Zusammensetzung der Rohstoffe werden Gemische eingesetzt, so dass ein gewünschter Gehalt an Aluminiumoxid, Siliciumdioxid und weitere Parameter wie das Verhältnis Si/Al, (Si+Al)/Ca usw. erhalten wird.

Die Rohstoffe können vorbehandelt werden, beispielsweise um Kohlenstoff und andere organische Bestandteile zu entfernen. Es kann auch eine thermische oder hydrothermische Behandlung erfolgen, bei der z.B. eine Umwandlung von unreaktiven kristallinen Phasen in amorphe Phasen erfolgt.

Flugaschen oder Stäube aus der Zementherstellung können bereits in der gewünschten Feinheit vorliegen. Sofern die Rohstoffe nicht in der gewünschten Feinheit vorliegen erfolgt in an sich bekannter Weise eine Mahlung. Sollen Rohstoffe gemischt werden, kann dies häufig vorteilhaft durch ein gemeinsames Vermahlen erfolgen. Beim Mahlen können übliche Vorrichtungen verwendet werden. Je nach Mahlbarkeit werden bevorzugt Mahlhilfsmittel wie Triisopropanolamin (TIPA) oder Triethanolamin (TEA) eingesetzt.

Als Aktivator werden die an sich bekannten Substanzen verwendet. Dies sind wie oben beschrieben vor allem Silikate, Hydroxide, Carbonate, Sulfate und Portlandzement bzw. Portlandzementklinker sowie entsprechende Kombinationen vorgenannter Aktivatoren. Als Silikate werden bevorzugt Natriumsilikat, Kaliumsilikat, wasserfreies Natriummetasilikat und Natriummetasilikatpentahydrat verwendet. Als Hydroxid eignen sich Alkali- und Erdalkalihydroxide sowie -oxide, die bei Kontakt mit Wasser zu Hydroxiden reagieren. Besonders bevorzugt sind Natrium-, Kalium- und Calciumhydroxid. Als Carbonat wird bevorzugt Natriumcarbonat verwendet. Als Sulfate eignen sich Natriumsulfat und Kaliumsulfat. Portlandzement oder Portlandzementklinker können auch in Form von Abfallfraktionen aus der Herstellung von Portlandzement genutzt werden, wie Prozessmehle und -stäube.

Die Art und Menge an Aktivator bzw. Aktivatoren wird in an sich bekannter Weise auf die latent-hydraulisch und/oder puzzolanisch wirksamen Bindemittelkomponenten/Rohmaterialien abgestimmt. Übliche Mengen liegen im Bereich von 10 bis 20 Gew.-% bezogen auf den Feststoffgehalt des Bindemittels. Festzuhalten ist, dass im Falle von Portlandzement(klinker) als Aktivator im Unterschied zu Portlandkompositzement und Portlandpuzzolanzement weniger Portlandzement(klinker) verwendet wird.

Trockene Aktivatoren können sofern nötig vorteilhaft bei einer Vermahlung zugemischt werden oder werden getrennt vermahlen. Gelöste Aktivatoren werden zweckmäßig mit dem Anmachwasser zugefügt, können aber auch vor oder nach diesem zugefügt werden.

Die Wasserzugabe erfolgt je nach Bindemittel vor allem zur Einstellung der Fließfähigkeit und zur Bereitstellung des Mediums zur Umstrukturierung der Aluminosilikate, Aluminate und Silikate, bei Bindemitteln mit hohem CaO-Gehalt auch zur Ermöglichung des hydraulischen Abbindens. Im Wasserbindemittelwert bezieht sich Bindemittel auf die Summe der Aluminosilikate, Aluminate, Silikate und den Feststoffgehalt der Aktivatoren, beim Wasser wird neben dem im Aktivator gebundenen Wasser auch ggfs. zum Lösen des Aktivators und/oder von Zusatzmitteln eingebrachtes Wasser berücksichtigt. In der Regel sind W/B im Bereich von 0,2 bis 0,5 brauchbar, besonders 0,3 bis 0,45, insbesondere von 0,35 bis 0,40.

Die Feinheit der festen Bindemittelbestandteile nach Blaine liegt typischerweise im Bereich von 3000 bis 5000 cm²/g, insbesondere bei etwa 4000 cm²/g. Eine höhere Feinheit führt bis zu einer bestimmten Grenze zu einer erhöhten Reaktivität, erfordert jedoch auch eine höhere Mahlenergie und mehr Wasser, so dass in an sich bekannter Weise für das jeweilige Bindemittel und seine Anwendung ein brauchbarer Kompromiss gewählt wird.

Neben den Bindemittelbestandteilen Aluminosilikat, Aluminat, Silikat und Aktivator(en) enthält das Bindemittel zur Einstellung der offenen Zeit und damit Gewährleistung einer brauchbaren Verarbeitbarkeit die erfindungsgemäße Verzögerermischung umfassend Natriumgluconat und Alkalihydrogencarbonat. Als Alkalihydrogencarbonat werden vorzugsweise Natrium- oder Kaliumhydrogencarbonat verwendet.

Die Menge liegt vorzugsweise im Bereich von 0,1 bis 10 Gew.-% bezogen auf das Bindemittel, besonders bevorzugt von 0,5 bis 5 Gew.-% und am meisten bevorzugt von 1 bis 3 Gew.-%.

Das Verhältnis Natriumgluconat zu Alkalihydrogencarbonat liegt vorzugsweise im Bereich von 9:1 bis 1:4, bevorzugt bei etwa 3:1 bis 1:1.

Als weitere Bestandteile der Verzögerermischung können Verzögerer auf Basis von Ligninsulfonaten, sulfoniertem Naphthalin-, Melamin- oder Phenolformaldehydkondensat, oder auf Basis von Acrylsäure-Acrylamidgemischen oder Polycarboxylatethern oder auf Basis von phosphatierten Polykondensaten; auf Basis von phosphatierten Alkylcarbonsäuren und Salzen dieser, auf Basis von (Hydroxy-)Carbonsäuren und Carboxylaten, insbesondere Citronensäure, Citraten, Weinsäure, Tartraten, Borax, Borsäure und Boraten, Oxalaten, Sulfanilsäure, Aminocarbonsäuren, Salicylsäure und Acetylsalicylsäure, Dialdehyden und Gemischen davon verwendet werden.

Die erfindungsgemäße Verzögerermischung kann im bevorzugten Dosier- und Mischungsverhältnis sowohl in gelöster als auch fester Form als Komponente des Bindemittels oder Betonzusatzmittel eingesetzt werden. Als Bindemittelkomponente wird die erfindungsgemäße Verzögerermischung hierbei bevorzugt in fester Form dem Bindemittel als weitere Komponente beigemischt oder im Rahmen erforderlicher Mahlprozesse mit Bindemittelkomponenten Covermahlen. Als Betonzusatzmittel kann die erfindungsgemäße Verzögerermischung sowohl in gelöster als auch fester Form im bevorzugten Dosier- und Mischungsverhältnis eingesetzt werden. In gelöster Form wird hierbei die Verzögerermischung vorzugsweise dem Anmachwasser zugesetzt. Der Zeitpunkt ist hierbei frei wählbar, erfolgt vorzugsweise jedoch während des Mischvorgangs von Bindemittel, Gesteinskörnung und Anmachwasser. Die Zugabe erfolgt vorzugsweise in einer Art und Weise, so dass eine homogene Verteilung des Zusatzmittels in der Betonmischung gewährleistet ist; dies kann in einzelnen Dosierschritten oder als kontinuierlicher Prozess während des Zeitraums der Zugabe des Anmachwassers erfolgen. In trockener Form wird die erfindungsgemäße Verzögerermischung bevorzugt nach Zugabe der Bindemittelkomponenten zugesetzt.

Die erfindungsgemäße Verzögerermischung verzögert das Erstarren von Alkali-aktivierten Bindemittelsystemen, insbesondere von Geopolymeren, die mittlere bis hohe CaO-Gehalte bezogen auf den Feststoffgehalt des Bindemittels aufweisen, und insbesondere in pH-Bereichen oberhalb der Wirksamkeitsgrenze bekannter Zusatzmittel. Die Verzögerung des Erstarrens des Bindemittels im Beton und Zementmörtel führt zu einer signifikanten Verlängerung von Verarbeitungszeiten und dadurch auch von möglichen Transportzeiten. Weiterhin ist das Verzögerersystem frei von Chloriden und verursacht keine Ausblühungen. Es eignet sich als Erstarrungsverzögerer für Baustellen-, Transport- und Pumpbeton, für Estrich und Zementmörtel sowie für große monolithische Bauteile (z.B. Precast-Anwendungen).

Die Erfindung ist besonders für Bindemittel mit hohem CaO-Gehalt und stark alkalische Aktivatoren von Vorteil. Der erfindungsgemäße Verzögerer erhöht die offene Zeit deutlich ohne die Druckfestigkeit zu beeinträchtigen. In manchen Fällen steigt die Druckfestigkeit sogar. Von besonderem Vorteil ist, dass die Wirkung bei höheren pH-Werten zunimmt. Außerdem ergibt sich eine plastifizierende Wirkung, durch welche die Verarbeitbarkeit verbessert wird. In wirtschaftlicher Hinsicht ist festzustellen, dass der erfindungsgemäße Verzögerer kostengünstiger ist, als etliche andere Vorschläge.

Die Erfindung soll anhand der folgenden Beispiele erläutert werden, ohne jedoch auf die speziell beschriebenen Ausführungsformen beschränkt zu sein. Soweit nichts anderes angegeben ist oder sich aus dem Zusammenhang zwingend anders ergibt, beziehen sich Prozentangaben auf das Gewicht, im Zweifel auf das Gesamtgewicht der Mischung.

Die Erfindung bezieht sich auch auf sämtliche Kombinationen von bevorzugten Ausgestaltungen, soweit diese sich nicht gegenseitig ausschließen. Die Angaben "etwa" oder "ca." in Verbindung mit einer Zahlenangabe bedeuten, dass zumindest um 10 % höhere oder niedrigere Werte oder um 5 % höhere oder niedrigere Werte und in jedem Fall um 1 % höhere oder niedrigere Werte eingeschlossen sind.

### Beispiel 1

Ein alkaliaktiviertes Bindemittel umfassend 64 Gew.-% Flugasche 1, 21 Gew.-% Hüttensand 1 und 15 Gew.-% Aktivator bezogen auf den Feststoffgehalt des Bindemittels, wurde durch Mischen vorgenannter Komponenten hergestellt. Das SiO₂/Na₂O-Verhältnis in der Aktivatorlösung, bestehend aus 40%-iger NaOH-Lösung und einem kommerziellen Wasserglas der Firma PQ (Produktname: "C0265") im Mischungsverhältnis von ca.1:1,7, betrug hierbei 1,0. Vor dem Zusammenführen der vorgenannten Komponenten wurde hierbei Flugasche 1 auf eine Feinheit von 2850 cm²/g aufgemahlen, Hüttensand 1 auf eine Feinheit von 4920 cm²/g. Die chemische Zusammensetzung von Flugasche 1 und Hüttensand 1 ist in Tabelle 3 angegeben. Für das Bindemittelsystem ergibt sich ein CaO-Gehalt von ca. 15,1 Gew.-% bezogen auf den Feststoffgehalt des Bindemittels.

**Tabelle 3**

| | Hüttensand 1 | Hüttensand 2 | Flugasche 1 | Flugasche 2 | Flugasche 3 |
|---|---|---|---|---|---|
| GV bei 1050 °C | 0,13 | 1,67 | 0,45 | 0,33 | 3,20 |
| SiO₂ | 32,91 | 36,65 | 55,55 | 33,69 | 56,73 |
| Al₂O₃ | 13,66 | 11,60 | 23,14 | 17,98 | 21,07 |
| TiO₂ | 0,47 | 0,90 | 1,35 | 1,52 | 0,94 |
| MnO | 0,34 | 0,37 | 0,05 | 0,02 | 0,06 |
| Fe₂O₃ | 1,22 | 0,46 | 5,12 | 5,74 | 7,71 |
| CaO | 41,01 | 38,89 | 10,14 | 27,46 | 4,07 |
| MgO | 5,17 | 7,83 | 1,86 | 6,21 | 1,91 |
| K₂O | 0,35 | 0,66 | 0,95 | 0,38 | 1,78 |
| Na₂O | 0,11 | 0,17 | 0,10 | 2,06 | 0,88 |
| SO₃ | 2,72 | 2,79 | 0,31 | 1,87 | 0,10 |
| P₂O₅ | 0,02 | 0,00 | 0,10 | 1,32 | 0,40 |
| Summe | 98,11 | 101,99 | 99,12 | 98,58 | 98,85 |

Zu dem Bindemittel wurden verschiedene Substanzen, die als Verzögerer vorgeschlagen worden sind, und der erfindungsgemäße Verzögerer in einer Menge von 4 % zugefügt. Das Zusammenführen der vorgenannten Komponenten zu einer homogenen Mischung erfolgte dabei in der Reihenfolge: 1) Flugasche, 2) Hüttensand, 3) diverse Verzögerer bzw. die erfindungsgemäße Verzögerermischung, 4) Aktivatorlösung, bestehend aus Natriumhydroxidlösung und Wasserglas, 5) Anmachwasser (demin. Wasser). 20 g des Bindemittels wurden bei 20 °C und W/B = 0,40 von Hand in einem Einmal-Plastikbecher mit einem Spatellöffel 2 Minuten lang angerührt, in eine kleine, luftdicht verschließbare Plastiktüte überführt und danach das Erstarrungs- und Erhärtungsverhalten des Leims beobachtet, durch Biegen und Fingerdruck geprüft und nach einem Ziffernsystem beurteilt. Die Beurteilung der Verfestigung erfolgt nach einem empirisch erarbeiteten System von insgesamt 6 Ziffern. Die Ziffern 0-3 beschreiben dabei das Verhalten der Probe vor dem Erhärten, bis zu einer Verfestigung, die ungefähr im Bereich des Erstarrungsendes nach DIN 1164 liegt. Die Ziffern 4-6 beschreiben das darauf folgende Erhärtungsverhalten. Die Ziffer 6 deutet im Allgemeinen auf eine Mörteldruckfestigkeit im Bereich um 4 MPa. Die Bezifferung der beobachteten Effekte enthält selbstverständlich eine subjektive, persönliche Komponente, die aber mit zunehmender Übung erfahrungsgemäß recht gleichmäßig wird. Die Bezifferung ermöglicht den Vergleich von Proben durch tabellarische und graphische Darstellung. Die Darstellung in Kurven stellt eine zusätzliche Plausibilitätsprüfung dar. Die Methode eignet sich besonders zur relativen Beurteilung von Verfestigungsvorgängen vor und während des Erstarrens von Bindemitteln im Rahmen von Serienproben, die schrittweise und systematisch verändert werden. Sie stellt eine sinnvolle Vorstufe zu Normprüfungen dar, bei der unter Verwendung kleiner Materialmengen die Wirkungstendenz bestimmter Additive oder Bindemittelmischungen, ggf. auch mit Hilfe einer großen Zahl von Einzelversuchen, erkennbar wird. Es wurde die Zeit tᵢₙᵢ bis zu einem geringen aber merklichen Ansteifen (ledrig) bestimmt. Die Häufigkeit der Prüfung einer Probe richtete sich dabei nach dem Charakter des Bindemittels, bei einem rasch erstarrenden und/oder rasch erhärtenden Bindemittel erwies es sich als angemessen, anfänglich im Abstand von ca. 5 Minuten oder sogar noch häufiger zu prüfen. In Tabelle 4 sind die Ergebnisse zusammengefasst.

**Tabelle 4 (" - " = nicht prüfbar, sofortige Erstarrung)**

| Verzögerer | tᵢₙᵢ [Min.] |
|---|---|
| ohne | - |
| ZnO | - |
| NaP₂O₇ | - |
| NaAlO₂ | - |
| C₁₈H₃₅NaO₂ | - |
| NaHCO₃ | 30 |
| C₆H₈O₇ | 40 |
| Na₂HPO₄·2H₂O + C₆H₁₁NaO₇+ NaHCO₃ | 45 |
| Ligninsulfonat + NaHCO₃ | 55 |
| Na₂HPO₄· 2H₂O | 60 |
| Na₂HPO₄ · 2H₂O + C₆H₁₁NaO₇ | 65 |
| Borax | 65 |
| C₆H₁₁NaO₇ | 90 |
| C₆H₁₁NaO₇ + NaHCO₃ | 120 |

Man erkennt, dass etliche Substanzen die offene Zeit verlängerten, die erfindungsgemäße Mischung jedoch den größten Effekt zeigte.

### Beispiel 2

Das Bindemittel von Beispiel 1 sowie ein analog zusammengesetztes Bindemittel mit Flugasche 2 wurden mit 1 % verschiedener Verzögerer vermischt und wie in Beispiel 1 die Zeit bis zum merklichen Ansteifen der Leimproben bestimmt. Außerdem wurden wie in [00019] beschrieben Mörtelprismen hergestellt und zusätzlich die Druckfestigkeit nach 28 Tagen (Lagerung bei 20°C, 100% rel. Luftfeuchte) gemessen. Die Ergebnisse fasst Tabelle 5 zusammen.

**Tabelle 5**

| Verzögerer | Flugasche 1 mittlerer CaO-Gehalt | | Flugasche 2 hoher CaO-Gehalt | |
|---|---|---|---|---|
| | tᵢₙᵢ [min] | 28 Tage Druckfestigkeit [MPa] | tᵢₙᵢ [min] | 28 Tage Druckfestigkeit [MPa] |
| ohne | 40 | 45 | - | - |
| NaHCO₃ | 40 | 42 | - | - |
| Na₂HPO₄·2H₂O | 45 | 33 | 15 | 28 |
| C₆H₁₁NaO₇ | 70 | 45 | 45 | 57 |
| C₆H₁₁NaO₇+ NaHCO₃ | 95 | 51 | 65 | 62 |
| Ligninsulfonat + NaHCO₃ | 50 | 48 | 20 | 58 |
| C₆H₁₁NaO₇⁺ Na₂HPO₄·2H₂O | 55 | 36 | 20 | 35 |
| Borax | 50 | 46 | 25 | 55 |

Bei Flugasche 1, die ein Bindemittel mit einem CaO-Gehalt von ca. 15,1 Gew.-% bezogen auf den Feststoffgehalt des Bindemittels ergibt, zeigte sich wiederum, dass zwar viele Vergleichssubstanzen eine Verzögerung bewirkten, aber nicht so stark wie erfindungsgemäß. Die 28 Tage Druckfestigkeit wurde dabei von den meisten Substanzen beeinträchtigt oder nicht verändert, beim erfindungsgemäßen Verzögerer jedoch deutlich gesteigert.

Das Bindemittel mit Flugasche 2 hatte einen hohen CaO-Gehalt von ca. 26,2 Gew.-% bezogen auf den Feststoffgehalt des Bindemittels und ließ sich ohne Verzögerer gar nicht anmischen. Auch ein Zusatz von Natriumhydrogencarbonat alleine half nicht. Bei den messbaren Systemen ergab sich nur für das erfindungsgemäße Zusatzmittel eine brauchbare offene Zeit und eine hohe Druckfestigkeit.

### Beispiel 3

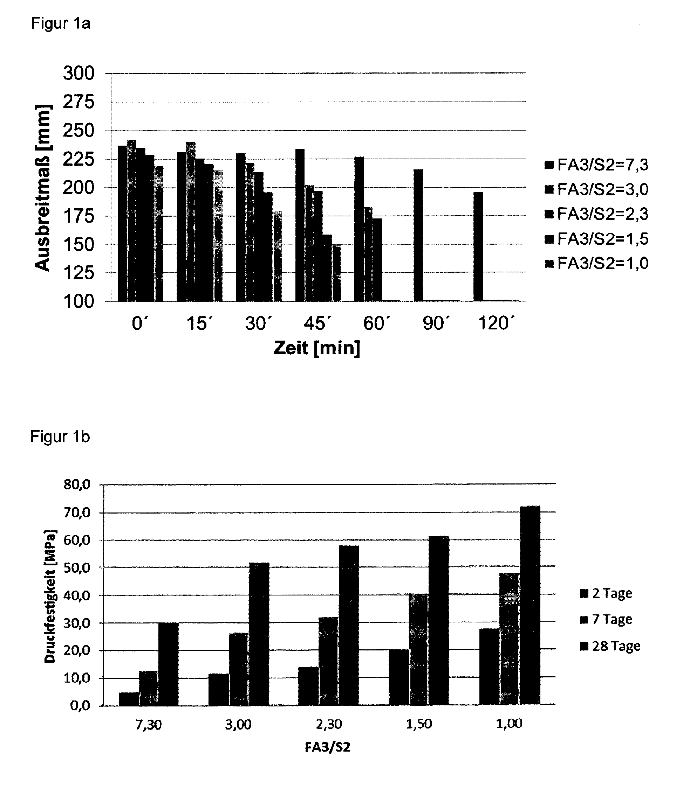

Zur Illustration des der Erfindung zugrunde liegenden Problems zeigt Figur 1 a das an Mörtelproben nach DIN/EN1015-3 gemessene Ausbreitmaß, Figur 1b die nach DIN/EN 1015-11 an Mörtelproben gemessene Druckfestigkeit.

Die zur Herstellung der Mörtelproben jeweils verwendeten Bindemittel enthielten Flugasche 3 ("FA3") und Hüttensand 2 ("S2") in variablen Mischungsverhältnissen (FA3/S2= 7,3 - 1,0), umfassend 85,0 Gew.-% (Gesamt) bezogen auf den Feststoffgehalt des Bindemittels. Der CaO-Gehalt bezogen auf den Feststoffgehalt des jeweiligen Bindemittels, stieg hierbei von ca. 7,0 Gew.-% (FA3/S2=7,3) auf ca. 18,0 Gew.-% (FA3/S2=1,0) sukzessive an. Die chemische Zusammensetzung von Flugasche 3 und Hüttensand 2 ist in Tabelle 3 angegeben. Das SiO₂/Na₂O-Verhältnis im für alle Bindemittel gleichermaßen verwendeten Aktivator, bestehend aus 40%-iger NaOH-Lösung und einem kommerziellen Wasserglas der Firma PQ (Produktname: "C0265") im Mischungsverhältnis von ca.1:1,7, betrug hierbei 1,0. Der W/B wurde bei allen Mörtelmischungen auf 0,40 eingestellt. Vor Zusammenführen der vorgenannten Komponenten wurde hierbei Flugasche 3 auf eine Feinheit von 4360 cm²/g aufgemahlen, Hüttensand 2 auf eine Feinheit von 4450 cm²/g.

In Figur 1 a ist gut zu erkennen, dass Bindemittel mit sukzessive ansteigendem CaO-Gehalt (ca. 7,0 - 18,0 Gew.-% bezogen auf den Feststoffgehalt des Bindemittels), respektive ansteigendem Hüttensandanteil (FA3/S2 = 7,3 - 1,0), schlechter verarbeitbar sind. Das Ausbreitmaß sinkt bei Mörtelproben mit signifikant erhöhtem CaO-Gehalt > 10,0 Gew.-% bereits nach 30 - 45 min stark ab, einhergehend mit einem deutlichen Ansteifen der Proben. Mit steigendem CaO-Gehalt verringert sich die offene Zeit so weit, dass eine Verarbeitung nicht mehr möglich ist. Für solche Geopolymer-Bindemittel sind daher verzögernde Zusatzmittel notwendig.

Figur 2 verdeutlicht den bereits in [00020] beschriebenen ambivalenten Charakter variabler CaO-Gehalte. Während die in [00060] beschriebenen Bindemittel "FA3/S2" mit niedrigem CaO-Gehalt < 10 Gew.% zwar eine gute Verarbeitbarkeit, jedoch schlechte Festigkeitsentwicklung zeigten, ging bei den Flugasche/Hüttensand basierten Bindemittelsystemen "FA3/S2" mit signifikant höheren CaO-Gehalten > 10 Gew.-% eine schlechtere Verarbeitbarkeit im Sinne einer sehr kurzen offenen Zeit in der Regel mit hohen Festigkeiten einher.

## Patentansprüche

1. Verzögerermischung für alkaliaktivierte Bindemittel, **dadurch gekennzeichnet, dass** es eine Mischung aus Natriumgluconat und Alkalihydrogencarbonat enthält.

2. Verzögerermischung gemäß Anspruch 1, **dadurch gekennzeichnet, dass** das Alkalihydrogencarbonat ein Natriumhydrogencarbonat, ein Kaliumhydrogencarbonat oder ein Gemisch davon ist

3. Verzögerermischung gemäß Anspruch 1 oder 2, **dadurch gekennzeichnet, dass** das Gewichtsverhältnis von Natriumgluconat zu Alkalihydrogencarbonat in einem Bereich von 9:1 bis 1:4, bevorzugt im Bereich von 3:1 bis 1:1 liegt.

4. Verzögerermischung gemäß mindestens einem der Ansprüche 1 bis 3, **dadurch gekennzeichnet, dass** zusätzliche Verzögerer auf Basis von Ligninsulfonaten; sulfoniertem Naphthalin-, Melamin- oder Phenolformaldehydkondensat; oder auf Basis von Acrylsäure-Acrylamidgemischen oder Polycarboxylatethern oder auf Basis von phosphatierten Polykondensaten; auf Basis von phosphatierten Alkylcarbonsäuren und Salzen dieser; auf Basis von (Hydroxy-)Carbonsäuren und Carboxylaten, insbesondere Citronensäure, Citraten, Weinsäure, Tartraten; Borax, Borsäure und Boraten, Oxalaten; Sulfanilsäure; Aminocarbonsäuren; Salicylsäure und Acetylsalicylsäure; Dialdehyden und Gemische davon enthalten sind.

5. Verzögerermischung gemäß Anspruch 4 **dadurch gekennzeichnet, dass** die zusätzlichen Verzögerer in einem Gewichtsanteil von 10 % bis 50 %, bezogen auf die Verzögerermischung, vorliegen.

6. Verzögerermischung gemäß Anspruch 4 oder 5, **dadurch gekennzeichnet, dass** Borax, Borsäure und Borate als zusätzliche Verzögerer verwendet werden.

7. Alkaliaktiviertes Bindemittel umfassend latent hydraulische und/oder puzzolanische Komponente(n), die Aluminosilikate und/oder Silikate und Aluminosilikate und/oder Calcium(alumino)silikate bereitstellen, **dadurch gekennzeichnet, dass** eine Verzögerermischung gemäß einem der Ansprüche 1 bis 6 enthalten ist.

8. Alkaliaktiviertes Bindemittel gemäß Anspruch 7, **dadurch gekennzeichnet, dass** die latent hydraulische(n) und oder puzzolanische(n) Komponente(n) ausgewählt sind aus der Gruppe bestehend aus kalziniertem Ton, calciumreicher und/oder silikatischer Flugasche, Hüttensand, Schlacke und Gemischen davon.

9. Alkaliaktiviertes Bindemittel gemäß Anspruch 7 oder 8, **dadurch gekennzeichnet, dass** es mindestens 40 % latent hydraulische Komponenten und/oder calciumreiche, puzzolanische Komponenten enthält.

10. Alkaliaktiviertes Bindemittel gemäß mindestens einem der Ansprüche 7 bis 9, **dadurch gekennzeichnet, dass** die latent hydraulische(n) und/oder puzzolanische(n) Komponente(n) zusammen einen CaO-Gehalt von mindestens 10 Gew.-% aufweisen.

11. Alkaliaktiviertes Bindemittel gemäß mindestens einem der Ansprüche 7 bis 10, **dadurch gekennzeichnet, dass** von 0,1 bis 10 Gew.-% Verzögerermischung bezogen auf das Bindemittel, bevorzugt von 0,5 bis 5 Gew.-% und am meisten bevorzugt von 1 bis 3 Gew.-%, enthalten sind.

12. Alkaliaktiviertes Bindemittel gemäß mindestens einem der Ansprüche 7 bis 11, **dadurch gekennzeichnet, dass** der Aktivator ausgewählt ist unter Alkalisilikaten, Hydroxiden, Alkalicarbonaten, Alkalisulfaten, Portlandzement, Portlandzementklinker und Gemischen von zwei oder mehr davon.

13. Alkaliaktiviertes Bindemittel gemäß mindestens einem der Ansprüche 7 bis 12, **dadurch gekennzeichnet, dass** der Aktivator ein Gewichtsverhältnis SiO₂/Na₂O_{equivalent} von mindestens 1,0, vorzugsweise von mindestens 1,25 aufweist.

14. Alkaliaktiviertes Bindemittel gemäß mindestens einem der Ansprüche 7 bis 13, **dadurch gekennzeichnet, dass** es Aluminosilikate, Silikate und Aluminate und/oder Calcium(alumino)silikate aus kalziniertem Ton, calciumreicher und/oder silikatischer Flugasche, Hüttensand und/oder Schlacke enthält.

15. Alkaliaktiviertes Bindemittel gemäß einem der Ansprüche 7 bis 14, **dadurch gekennzeichnet, dass** Betonverflüssiger und/oder Fließmittel und/oder zusätzliche Verzögerer enthalten sind, vorzugsweise auf Basis von Ligninsulfonaten; sulfoniertem Naphthalin, Melamin- oder Phenolformaldehydkondensat; oder auf Basis von Acrylsäure-Acrylamidgemischen oder Polycarboxylatethern oder auf Basis von phosphatierten Polykondensaten; phosphatierten Alkylcarbonsäuren und Salzen dieser; (Hydroxy-)Carbonsäuren und Carboxylaten, insbesondere Citronensäure, Citrate, Weinsäure, Tartrate; Borax, Borsäure und Borate, Oxalate; Sulfanilsäure; Aminocarbonsäuren; Salicylsäure und Acetylsalicylsäure; Dialdehyde und Gemischen davon.

16. Verfahren zur Einstellung der Festigkeitsentwicklung von alkaliaktivierten Bindemitteln, **dadurch gekennzeichnet, dass** dem alkaliaktivierten Bindemittel Natriumgluconat und Alkalihydrogencarbonat als Verzögerermischung zugesetzt werden.

17. Verfahren gemäß Anspruch 16, **dadurch gekennzeichnet, dass** als Alkalihydrogencarbonat ein Natriumhydrogencarbonat, ein Kaliumhydrogencarbonat oder ein Gemisch davon verwendet wird.

18. Verfahren gemäß Anspruch 16 oder 17, **dadurch gekennzeichnet, dass** von 0,1 bis 10 Gew.-% Verzögerer bezogen auf das Bindemittel, besonders bevorzugt von 0,5 bis 5 Gew.-% und am meisten bevorzugt von 1 bis 3 Gew.-%, verwendet werden.

19. Verfahren gemäß Anspruch 16, 17 oder 18, **dadurch gekennzeichnet, dass** Natriumgluconat und Alkalihydrogencarbonat in einem Gewichtsverhältnis von Natriumgluconat zu Alkalihydrogencarbonat im Bereich von 9:1 bis 2:8, bevorzugt von etwa 3:1 bis 1:1, verwendet werden.
